Europäisches Patentamt

European Patent Office ·

Office européen des brevets

(19)

(11) Veröffentlichungsnummer: **0 403 914**

**A1**

(12) **EUROPÄISCHE PATENTANMELDUNG**

(21) Anmeldenummer: **90111003.1**

(22) Anmeldetag: **11.06.90**

(51) Int. Cl.5: **C08F 2/26**

(30) Priorität: **19.06.89 DE 3919961**

(43) Veröffentlichungstag der Anmeldung:
**27.12.90 Patentblatt 90/52**

(84) Benannte Vertragsstaaten:
**GR**

(71) Anmelder: **Henkel Kommanditgesellschaft auf Aktien**
**Postfach 1100 Henkelstrasse 67**
**D-4000 Düsseldorf 1(DE)**

(72) Erfinder: **Fabry, Bernd, Dr.**
**Danzinger Strasse 31**
**D-4052 Korschenbroich(DE)**
Erfinder: **Höfer, Rainer, Dr.**
**Klever Strasse 31**
**D-4000 Düsseldorf 30(DE)**
Erfinder: **Müller-Borges, Joachim, Dr.**
**Marderstrasse 83**
**D-4019 Monheim(DE)**

(54) **Verwendung von Fettalkyl- bzw. Fettalkenyl-Hydroxysulfonaten als Emulgatoren für die Emulsionspolymerisation.**

(57) Die Verwendung von Fettalkyl- bzw. Fettalkenyl-hydroxysulfonaten der allgemeinen Formel I
$$R^1O\text{-}(C_mH_{2m})_n\text{-}OH \qquad (I)$$
in der
$R^1$ eine Gruppe der Formel IIa bzw. IIb
$$CH_3\text{-}(CH_2)_x\text{-}CH(OH)\text{-}(CH_2)_y\text{-}CH(SO_3M)\text{-}(CH_2)_z\text{-}CH_2\text{-} \qquad (IIa)$$
bzw.
$$CH_3\text{-}(CH_2)_x\text{-}CH(SO_3M)\text{-}(CH_2)_y\text{-}CH(OH)\text{-}(CH_2)_z\text{-}CH_2\text{-} \qquad (IIb)$$
oder ein durch Abspaltung eines Wassermoleküls aus der Gruppe der Formel IIa bzw. IIb gebildeter Rest ist,
$m$ die Zahl 2 und/oder 3,
$n$ eine Zahl im Bereich von 0 bis 100, insbesondere von 0 bis 40,
$x$, $y$ und $z$ jeweils Zahlen im Bereich von 0 bis 14, wobei die Summe von $x$, $y$ und $z$ 14 beträgt, und
$M$ ein Alkalimetallkation, ein Ammoniumion oder ein Äquivalent eines Erdalkalimetallkations ist,
als Emulgatoren für die Emulsionspolymerisation, bietet Vorteile, insbesondere wegen der Hydrolysebeständigkeit der Emulgatoren und ihrer biologischen Abbaubarkeit.

EP 0 403 914 A1

## Verwendung von Fettalkyl- bzw. Fettalkenyl-hydroxysulfonaten als Emulgatoren für die Emulsionspoly-merisation.

Die Erfindung betrifft die Verwendung von Fettalkyl- bzw. Fettalkenyl-hydroxysulfonaten der allgemeinen Formel I

$$R^1O\text{-}(C_mH_{2m})_n\text{-}OH \qquad (I)$$

in der

$R^1$ eine Gruppe der Formel IIa bzw. IIb

$$CH_3\text{-}(CH_2)_x\text{-}CH(OH)\text{-}(CH_2)_y\text{-}CH(SO_3M)\text{-}(CH_2)_z\text{-}CH_2\text{-} \qquad (IIa)$$

bzw.

$$CH_3\text{-}(CH_2)_x\text{-}CH(SO_3M)\text{-}(CH_2)_y\text{-}CH(OH)\text{-}(CH_2)_z\text{-}CH_2\text{-} \qquad (IIb)$$

oder ein durch Abspaltung eines Wassermoleküls aus der Gruppe der Formel IIa bzw. IIb gebildeter Rest ist,

m die Zahl 2 und/oder 3,

n eine Zahl im Bereich von 0 bis 100, insbesondere von 0 bis 40,

x, y und z jeweils Zahlen im Bereich von 0 bis 14, wobei die Summe von x, y und z 14 beträgt, und

M ein Alkalimetallkation, ein Ammoniumion oder ein Äquivalent eines Erdalkalimetallkations ist,

als Emulgatoren für die Emulsionspolymerisation.

Als Emulgatoren für die Emulsionspolymerisation olefinische Doppelbindungen aufweisender, polymerisierbarer Monomere sind verschiedene ionische oder nicht-ionische Emulgatoren beschrieben worden, z.B. Alkylarylsulfonate, Nonylphenolethoxylate und Ethylenoxid/Propylenoxid-Blockcopolymere, vgl. Technische Broschüre RES/VVX/4 (G), 3. Ausgabe, 1976, Herausgeber: Shell-Chemie, alpha-Sulfofettsäureester, vgl. DE-A 33 39 407, tertiäre Hydroxyalkylamine, vgl. DE-A 33 37 640, Anlagerungsprodukte von Ethylenoxid an aliphatische vicinale Diole mit 8 bis 25 Kohlenstoffatomen, vgl. DE-A 33 19 782, Polyethylenoxy-sulfonate, vgl. EP-A 0 026 932, und Oleylsulfate, vgl. FR-PS 977 296.

Die vorgenannten Tenside zeigen bei ihrer Verwendung bei der Emulsionspolymerisation verschiedene Nachteile. So weisen z.B. die Polyethylenoxysulfonate gemäß EP 0 026 932 in sie enthaltenden wäßrigen Systemen eine starke Schaumbildung auf und sind zudem aufwendig herzustellen. Dagegen sind Oleylsulfate gemäß der FR-PS 977 296 zwar schaumarm, sie sind jedoch nur bei starker Pufferung im alkalischen pH-Bereich verseifungsstabil; bei längerer Lagerung als verdünnte Lösungen neigen sie bei neutralen bis leicht sauren pH-Werten zur Verseifung ("Nachsäuern"). Andere Tenside, z.B. Alkylarylsulfonate und Nonylphenol-ethoxylate, sind nicht oder nur schlecht biologisch abbaubar.

Die Erfindung beruht auf der Erkenntnis, daß Fettalkyl- bzw. Fettalkenyl-hydroxysulfonate der allgemeinen Formel I eine Gruppe von schaumarmen, leicht biologisch abbaubaren und auf leichte Weise herzustellenden Tenside sind, die sich ausgezeichnet als Emulgatoren für die Emulsionspolymerisation eignen. Die Fettalkyl- bzw. Fettalkenyl-hydroxysulfonate der allgemeinen Formel I sind aus der DE-A 37 25 030 bekannt; sie weisen innenständige Sulfonatgruppen auf und können erhalten werden, indem man, wie in der DE-A 37 25 030 beschrieben, Oleylalkohol bzw. technische Gemische desselben verestert, z.B. mit Essigsäure, wobei die eingeführte Esterfunktion als Schutzgruppe wirkt, und die so erhaltenen Ester mit gasförmigem Schwefeltrioxid bei Temperaturen von 10 bis 80 °C in hierfür geeigneten Reaktoren, insbesondere vom Typ der Fallfilmreaktoren, sulfoniert. Das bei der Sulfonierung eingesetzte Schwefeltrioxid wird dabei mit Luft oder einem inerten Gas, z.B. mit Stickstoff, auf 1 bis 10 Vol.-% $SO_3$-Gehalt, verdünnt. Anschließend wird das erhaltene Sulfonierungsprodukt mit wäßrigen Basen, z.B. Natronlauge, Kalilauge, Lösungen von Erdalkalimetallhydroxiden oder Ammoniak in Wasser oder dergleichen neutralisiert, wobei die vorgenannte Schutzgruppe abgespalten wird. Die Herstellung der Fettalkyl- bzw. Fettalkenyl-hydroxysulfonate der allgemeinen Formel I, die zusätzlich Polyethylenoxy- und/oder Polypropylenoxygruppen aufweisen (m = 2 und/oder 3, n > 0) kann analog aus Anlagerungsprodukten von Ethylenoxid und/oder Propylenoxid (mit random- oder block-Verteilung der Propylenoxygruppen) an Oleylalkohol bzw. technische Gemische desselben mit anderen Fettalkoholen erfolgen.

Die Struktur der Fettalkyl- bzw. Fettalkenyl-hydroxysulfonate der allgemeinen Formel I ist hinsichtlich der Gruppe $R^1$ noch nicht abschließend geklärt. In Analogie zu sulfonierten Olefinen ist anzunehmen, daß pro Doppelbindung der Oleylreste bei der Sulfonierung und der anschließenden Hydrolyse der Sulfonierungsprodukte eine Hydroxyl- und eine Sulfonatgruppe in die Alkylkette eingeführt wird, wobei sich Strukturen der allgemeinen Formel IIa und IIb ausbilden; aus diesen Strukturen kann durch Abspaltung eines Moleküls Wasser auch ein mit einer Sulfonatgruppe substituierter Alkenylrest gebildet werden. Möglicherweise liegt ein Gemisch der vorgenannten Verbindungen vor.

Die erfindungsgemäß einzusetzenden Fettalkyl- bzw. Fettalkenyl-hydroxysulfonate der allgemeinen

EP 0 403 914 A1

Formel I eignen sich als Emulgatoren bei der Emulsionspolymerisation von nahezu sämtlichen technisch wichtigen, im wesentlichen wasserunlöslichen Monomeren. Typische Beispiele für diese Monomeren sind Vinylaromaten, z.B. Styrol, Divinylbenzol oder Vinyltoluol, polymerisierbare Olefine und Diolefine wie Propen, Butadien oder Isopren, Ester der Acryl- oder Methacrylsäure mit linearen oder verzweigten Alkoholen mit 1 bis 18 Kohlenstoffatomen, insbesondere von Alkoholen mit 1 bis 8 Kohlenstoffatomen und - besonders bevorzugt - von Methylestern, Ethylestern und Butylestern derselben, Vinylester von Säuren mit 2 bis 12 Kohlenstoffatomen, insbesondere Vinylacetat, Vinylpropionat, Vinyl-2-ethylhexanat und Vinyllaurat, Vinylalkylether mit 1 bis 8 Kohlenstoffatomen aufweisenden Alkylgruppen, Vinylchlorid, Vinylidenchlorid und dergleichen; die vorgenannten Monomeren können in Gegenwart der erfindungsgemäß einzusetzenden Fettalkyl- bzw. Fettalkenyl-hydroxysulfonate homopolymerisiert oder mit anderen der genannten Verbindungen aus der vorstehenden Aufzählung copolymerisiert werden. Weiterhin können Copolymerisationen durchgeführt werden, bei denen bis zu 50 Gew.-% weitere, an sich teilweise oder vollständig wasserlösliche Monomere beteiligt sind, z.B. Acrylnitril, Methacrylnitril, Halbester der Malein- bzw. Fumarsäure mit 1 bis 8 Kohlenstoffatomen, Acrylsäure, Methacrylsäure, Maleinsäure, Fumarsäure, Crotonsäure und/oder Itaconsäure.

Die unter Verwendung der Fettalkyl- bzw. Fettalkenylhydroxysulfonate der allgemeinen Formel I herzustellenden wäßrigen Dispersionen weisen in der Praxis 15 bis 75 Gew.-% polymerisierte Monomere (Trockenrückstand) in Wasser oder Wasser/wasserlöslichen organischen Lösemitteln auf. Bevorzugt ist der Bereich von 20 bis 60 Gew.-% Trockenrückstand; jedoch sind für spezielle Anwendungen auch wäßrige Dispersionen mit weniger als 15 Gew.-% Trockenrückstand herstellbar. Bei den vorgenannten Verfahren zur Emulsionspolymerisation können auch weitere übliche Polymerisationshilfsstoffe eingesetzt werden, insbesondere Initiatoren, z.B. anorganische Peroxidverbindungen wie Kalium- oder Ammoniumpersulfat oder Wasserstoffperoxid; weiterhin organische Peroxidverbindungen oder organische Azoverbindungen, soweit diese für die Emulsionspolymerisation verwendbar sind. Die Initiatoren werden in üblichen Mengen, d.h. von 0,05 bis 2 Gew.-%, vorzugsweise von 0,1 bis 0,5 Gew.-% eingesetzt. Weitere geeignete Hilfsstoffe sind Puffersubstanzen, z.B. Natriumhydrogencarbonat, Natriumpyrophosphat oder Natriumacetat, die in Mengen von bis zu 2 Gew.-% eingesetzt werden können. Auch Beschleuniger wie Formaldehyd-sulfoxylat können eingesetzt werden. Weiterhin können übliche, bei der Emulsionspolymerisation verwendete Molekulargewichtsregler, z.B. Butenol oder auch organische Thioverbindungen wie Mercaptoethanol, Thioglycolsäure, Octylmercaptan oder tert.-Dodecylmercaptan verwendet werden. Für die Durchführung der Polymerisationsverfahren kommen verschiedene, üblicherweise bei der Emulsionspolymerisation angewandte Methoden in Betracht, z.B. eine Gesamtvorlage aller Reaktanden, ein Monomerenzulauf oder ein Emulsionszulauf. Im allgemeinen wird dazu die Temperatur des Polymerisationsmediums in einem Bereich von 40 bis 100, insbesondere 50 bis 90 °C, gehalten. Als pH-Wert wird zweckmäßigerweise ein Bereich zwischen 3 und 9 eingehalten, jedoch ist dank der Unverseifbarkeit der Sulfonatgruppen mit den erfindungsgemäßen Verbindungen auch eine Emulsionspolymerisation bei niedrigeren pH-Werten möglich.

Die vorgenannten Verfahren zur Emulsionspolymerisation werden zweckmäßigerweise in kühl- und heizbaren, mit Rührer und Temperaturmeßeinrichtung versehenen Behältern, z.B. in Rührdruckkesseln, durchgeführt. Ebenfalls möglich ist die Verwendung von Rohrschlangenreaktoren oder sogenannten Loop-Reaktoren.

Nach Beendigung der Polymerisation wird die Polymerisatdispersion zweckmäßigerweise abgekühlt und über Siebeinrichtungen aus dem Reaktor entfernt. Falls die Reaktionsprodukte als Festprodukte isoliert werden sollten, wird die Polymerisatdispersion zweckmäßigerweise ausgefällt oder sprühgetrocknet. Bevorzugt ist jedoch eine direkte Verwendung der bei der Polymerisation erhaltenen Dispersionen als Bindemittel für Farben, Klebstoffe, Papierstreichmassen und andere Beschichtungsmittel.

Weitere Bedingungen für Verfahren zur Emulsionspolymerisation unter Verwendung der erfindungsgemäß einzusetzenden Fettalkyl-bzw. Fettalkenyl-hydroxysulfonate der allgemeinen Formel I können von dem Fachmann in üblicher Weise an die jeweiligen Erfordernisse angepaßt oder frei gewählt werden. Das allgemeine Fachwissen auf dem Gebiet der Emulsionspolymerisation ergibt sich beispielsweise aus E.W. Duck, Encyclopedia of Polymer Science and Technology, Vol. 5, S. 801-856, John Wiley & Sons, New York (1966) und der dort zitierten Literatur. Weiterhin sei verwiesen auf F. Hölscher, Dispersionen synthetischer Hochpolymere, Teil 1, Springer Verlag Berlin, Heidelberg, New York (1969), und auf K.O. Calvert (Editor), Polymer Latices and their Applications, Applied Science Publishers Ltd., London (1982); A. Schmidt, Methoden der Organischen Chemie (Houben-Weyl), 4. Auflage, Bd. E 20, Makromolekulare Stoffe, Teil 1, S. 227-268, Stuttgart (1987).

Gemäß einer bevorzugten Ausführungsform der Erfindung verwendet man Fettalkyl- bzw. Fettalkenyl-hydroxysulfonate der allgemeinen Formel I, in denen M ein Natriumion, m die Zahl 2 und n eine Zahl im Bereich von 0 bis 20, insbesondere von 0 bis 10, ist.

3

Gemäß einer weiteren vorteilhaften Ausführungsform der Erfindung setzt man die Fettalkyl- bzw. Fettalkenylhydroxysulfonate der allgemeinen Formel I in einer Menge von 0,5 bis 10, insbesondere von 1 bis 5 Gew.-%, insbesondere 1 bis 3 Gew.-%, bezogen auf zu erwartende Polymeremulsion, ein. Besonders bevorzugt ist weiterhin der Einsatz der Fettalkylbzw. Fettalkenylhydroxysulfonate der allgemeinen Formel I in der Emulsionspolymerisation von olefinische Doppelbindungen aufweisenden, polymerisierbaren Monomeren, insbesondere von (Meth)acrylsäure und Derivaten derselben oder Vinylestern.

Obwohl die erfindungsgemäß zu verwendenden Fettalkyl- bzw. Fettalkenyl-hydroxysulfonate der allgemeinen Formel I sehr gute Eigenschaften aufweisen, wenn sie als einzige Emulgatoren eingesetzt werden, können sie auch zusammen mit weiteren anionaktiven Coemulgatoren eingesetzt werden.

Geeignet sind hier Paraffinsulfonate, Alkylbenzolsulfonate, Alkylnaphthalinsulfonate, Seifen linearer oder verzweigter, gesättigter oder ungesättigter Fettsäuren, Fettalkohol- und Synthesealkoholsulfate, Alkyldiphenyletherdisulfonate, Sulfobernsteinsäuremono- und -diester von linearen, verzweigten oder cyclischen Alkoholen sowie ganz allgemein Sulfate, Sulfonate, Sulfosuccinate, Isethionate, Phosphate und Ethercarbonsäuren der nachstehend genannten nicht-ionischen Emulgatoren. Beim Einsatz der erfindungsgemäß einzusetzenden Emulgatoren zusammen mit weiteren anionischen Emulgatoren ist es bevorzugt, die Gesamtemulgatormenge unter 5 Gew.-%, bezogen auf Monomere, zu halten.

Weiterhin ist es auch möglich, die erfindungsgemäß einzusetzenden Fettalkyl- bzw. Fettalkenyl-hydroxysulfonate in Kombination mit nicht-ionischen Coemulgatoren einzusetzen. Dies kann zu Dispersionen mit erhöhter Stabilität, z.B. gegenüber Scherkräften, Temperatureinflüssen und Elektrolyten führen. Die nicht-ionischen Emulgatoren werden dabei in Mengen von 0,5 bis 5, vorzugsweise 1 bis 3 Gew.-%, bezogen auf Monomere, zugegeben. Dabei ist es möglich, die nicht-ionischen Emulgatoren zu Beginn der Polymerisation vorzulegen oder sie im Verlauf der Polymerisation zuzudosieren. Eine weitere Variante sieht vor, eine Präemulsion unter Verwendung oder Mitverwendung der nicht-ionischen Emulgatoren herzustellen und diese im Verlauf der Polymerisation zuzudosieren. Es ist auch möglich, zur Nachstabilisierung der unter Verwendung der Fettalkyl- bzw. Fettalkenyl-hydroxysulfonate der allgemeinen Formel I erhaltenen Dispersionen diese mit nicht-ionischen Emulgatoren zu versetzen. Typische Beispiele für nicht-ionische Emulgatoren sind

- lineare, verzweigte, cyclische, gesättigte und ungesättigte Alkylpolyglykolether, insbesondere Fettalkoholpolyglykolether;
- Mono-, Di- und Trialkylarylpolyglykolether, insbesondere Octyl- und Nonylphenolpolyglykolether, Dinonylphenolpolyglykolether, Triisobutylphenolpolyglykolether;
- Arylpolyglykolether, z.B. Umsetzungsprodukte von Phenol mit 3 bis 10 mol Ethylenoxid;
- Polyglykolether von Hydroxyalkanolen, z.B. gemäß DE-A 33 19 782;
- endgruppenverschlossene Alkyl- oder Alkylarylpolyglykolether, z.B. gemäß DE-A 35 30 301 und DE-A 36 43 896;
- Carbonsäurepolyglykolester, insbesondere Fettsäurepolyglykolester;
- Fettsäurealkanolamid-ethylenoxid-Addukte, insbesondere Cocosfettsäuremonoethanolamid-Ethylenoxid-Addukte;
- Ethylenoxid/Propylenoxid-Blockpolymere;
- ethoxylierte Sorbitanester, insbesondere Sorbitanmonolaurat + 20 mol Ethylenoxid;
- ethoxylierte Fettamine.

Die erfindungsgemäß einzusetzenden Fettalkyl- bzw. Fettalkenyl-hydroxysulfonate der allgemeinen Formel I können auch zusammen mit Schutzkolloiden eingesetzt werden. Typische Beispiele für derartige Schutzkolloide sind vollständig oder teilweise verseifte Homo- und/oder Copolymere des Vinylacetats, z.B. teilverseiftes Polyvinylacetat, oder vollständig verseifte Copolymere aus Vinylacetat und Vinylethern. Bevorzugte Copolymere weisen 1 bis 4 Kohlenstoffatome im Etherteil des Polyvinylethers auf. Weitere Schutzkolloide können von Polysacchariden abgeleitet sein. So sind insbesondere Cellusoseether wie Hydroxyethylcellulose, Hydroxypropylcellulose, Carboxymethylcellulose, Methylcellulose, Ethylcellulose oder Cellulose-Mischether geeignet. Weiterhin geeignet sind Polyacrylamid sowie dessen Copolymere mit Acrylsäure, Acrylnitril oder Acrylestern. Auch Kondensationsprodukte aus Naphthalinsulfonsäure und Formaldehyd oder andere wasserlösliche Formaldehydharze, insbesondere Harnstoff-Formaldehyd-Harze, können verwendet werden. Schließlich sind Casein, Gelatine, Gummi arabicum sowie natürliche Stärke und substituierte Stärkederivate wie Hydroxyethylstärke geeignete Schutzkolloide.

Zusammen mit den erfindungsgemäß einzusetzenden Emulgatoren können auch sogenannte einpolymerisierbare Emulgatoren -besser als stabilisierende Monomere bezeichnet - eingesetzt werden. Hier sind beispielhaft Vinylsulfonat, Allylsulfonat, 2-Acrylamido-2-methylpropansulfonsäure, Vinylphosphonsäure sowie Acryl- und Methacrylester nicht-ionischer Emulgatoren oder Styrolsulfonsäure zu nennen.

Die Erfindung wird im folgenden anhand von bevorzugten Ausführungsbeispielen näher erläutert.

4

EP 0 403 914 A1

Zunächst werden die Herstellung von erfindungsgemäß zu verwendenden Fettalkyl- bzw. Fettalkenyl-hydroxysulfonaten der allgemeinen Formel I und die Prüfmethoden für die erfindungsgemäß erhaltenen Polymerdispersionen erläutert.

1. Geprüfte Fettalkyl- bzw. Fettalkenyl-hydroxysulfonate der allgemeinen Formel I [innenständig substituierte Oleyl(ether)sulfonate].

    a) Oleylalkohol-sulfonat-Na-Salz
    b) Oleylalkohol-5EO-sulfonat-Na-Salz
    c) Oleylalkohol-10EO-sulfonat-Na-Salz

Die vorstehend genannten Oleyl(ether)sulfonate werden im folgenden mit OS, OES5 und OES10 bezeichnet.

2. Herstellung der Oleyl(ether)sulfonate.

a) Oleylacetat (technisch)

Ein technischer Oleylalkohol mit einer Jodzahl von 94, einer OH-Zahl von 210 und einer ungefähren Kettenlängenverteilung von 0 bis 2 % $C_{14}$, 2 bis 10 % $C_{16}$, 87 bis 95 % $C_{18}$ und 0 bis 3 % $C_{20}$, wurde mit Essigsäureanhydrid (20 mol-% Überschuß) 4 Stunden bei 118 °C umgesetzt. Das Reaktionsgemisch wurde auf Eiswasser gegossen; die organische Phase wurde mehrmals mit Wasser gewaschen. Der erhaltene Rohester wurde getrocknet und durch Destillation gereinigt. Der erhaltene Ester wies eine Jodzahl von 83 und eine Rest-Hydroxylzahl von 0,9 auf.

b) OS

In einem kontinuierlich arbeitenden Fallfilmreaktor wurden 3,1 kg (10 mol) des unter 2a) erhaltenen Oleylacetats bei 30 °C mit einem Durchsatz von 10 g/min mit Schwefeltrioxid im Stoffmengenverhältnis von Oleylacetat zu Schwefeltrioxid = 1 : 1,3 umgesetzt. Das rohe Sulfonierungsprodukt wurde kontinuierlich in verdünnte wäßrige Natronlauge eingerührt und anschließend 4 Stunden bei 95 °C hydrolysiert. Nach dem Abkühlen auf 20 °C wurde der pH-Wert des Reaktionsgemisches mit wäßriger Mineralsäure auf 7 eingestellt.
Aniontensid (gem. DGF-H-III-10): 1,498 mval/g
Unsulfierte Anteile (gem. DGF-G-III-6b): 5,0 Gew.-%
Natriumsulfat: 1,0 Gew.-%
Natriumacetat: 5,0 Gew.-%

c) OES5

Ein Anlagerungsprodukt von durchschnittlich 5 mol Ethylenoxid an einen technischen Oleylalkohol der unter 2 a) angegebenen Spezifikation wurde analog zu der oben beschriebenen Arbeitsweise zunächst in das Acetat überführt und anschließend sulfoniert. Das Produkt wies die folgenden Kenndaten auf:
Aniontensid (gem. DGF-H-III-10): 0,362 mval/g
Unsulfierte Anteile (gem. DGF-G-III-6b): 6,0 Gew.-%
Natriumsulfat: 3,0 Gew.-%
Natriumacetat: 3,0 Gew.-%

d) OES10

Analog zu den oben beschriebenen Arbeitsweisen wurde ein Anlagerungsprodukt von durchschnittlich 10 mol Ethylenoxid an Oleylalkohol der obigen Spezifikation zunächst in das Acetat überführt und anschließend sulfoniert.

5

3. Prüfmethoden für erfindungsgemäß erhaltene Polymerdispersionen

a) Koagulatgehalt nach der Herstellung

Die fertiggestellte Dispersion wurde durch einen tarierten Perlonsiebbeutel der Fa. Schwegmann mit 80 micron Maschenweite abgefüllt. Der Siebbeutel mit evtl. vorhandenem Koagulat wurde 24 h bei 105°C getrocknet und das Koagulat durch Differenzwägung bestimmt.

b) Trockengehalt

Trockenrückstandbestimmungswaage (Fa. Sartorius), Typ 709301. Der Feststoffgehalt wurde bei Stufe 7 und 20 min Trockenzeit bestimmt. Die Einwaage betrug ca. 5 g.

c) pH-Wert

Der pH-Wert wurde mit einem handelsüblichen pH-Meter bestimmt.

d) Viskosität

Die Viskosität wurde mit dem Brookfield-Viskosimeter vom Typ RVT bei 25°C (Spindel 1, 20 U.min$^{-1}$) gemessen.

e) Mindestfilmbildungstemperatur (MFT)

Die Bestimmung erfolgte mit einem Filmbildungs- und Blockpunktprüfgerät der Fa. Coesfeld gemäß DIN 53787.

f) Mechanische Stabilität

Die mechanische Stabilität der Dispersion wurde mit einem Klaxon-Rührer vom Typ HM 5 UB 2 unter Zusatz eines Entschäumers nach ASTM D 1706 getestet.

g) Schaumbildungsuntersuchung

Methode A:
Götte-Schlagschaum-Methode gem. DIN 53902, 10°d Wasser.
Methode B:
Freifall-Kreislaufmethode.
Eine Prüflösung bestehend aus 50 g der Polymerdispersion und 450 g VE-Wasser wurde in einem 21-Meßzylinder mit Heizmantel überführt. Mit Hilfe einer Schlauchpumpe wurde die Testlösung bei 25°C bei einer Durchflußmenge von 3 1.m$^{-1}$ in einen ständigen Umfluß gebracht. Die Prüflösung wurde mit einem Glasrohr vom Boden des Meßzylinders angesaugt und über ein zweites Glasrohr in freiem Fall zurückgeführt.

Beispiel 1.

Copolymerisation eines Vinylacetat/tert.-Monocarbonsäure-vinylester-Gemisches.

Der Monocarbonsäure-vinylester war ein handelsübliches Gemisch eines Vinylesters von isomeren

EP 0 403 914 A1

synthetischen, gesättigten, im wesentlichen tertiären Monocarbonsäuren mit einer Kettenlänge von $C_{10}$, beschrieben in der Technischen Broschüre AES/VVX/4 (G), 3. Ausgabe, Oktober 1976, Herausgeber: Shell-Chemie, und wird im folgenden mit der auch dort verwendeten Abkürzung VeoVa 10 bezeichnet.

Die Copolymerisation wurde in einem geschlossenen, beheizbaren 2 l-Planschliffbecher mit V4A-Ankerrührer (Rührgeschwindigkeit 100 bis 150 U/min), Vorlagegefäßen und Rückflußkühler durchgeführt.

Es wurden zunächst getrennt die folgenden Reaktionskomponenten hergestellt:

Komponente I:

191,5 g vollentsalztes Wasser

1,3 g OS

0,5 g Kaliumperoxodisulfat (Starter)

0,2 g Borax (Puffer).

Komponente II:

282,3 g vollentsalztes Wasser

0,8 g OS

17,1 g eines handelsüblichen Addukts von 30 mol Ethyenoxid an Nonylphenol (70 % aktive Substanz; Coemulgator)

1,9 g Kaliumperoxodisulfat

2,1 g Borax.

Komponente III:

330,1 g Vinylacetat

143,5 g VeoVa 10

4,8 g Acrylsäure.

Zur pH-Einstellung:

23,9 g Ammoniumcarbonatlösung (10 %-ig).

Die Komponente I wurde im Reaktionsgefäß vorgelegt. Das Gefäß wurde unter Rühren 30 min mit Stickstoff gespült und anschließend auf 80° C aufgeheizt. Während der Aufheizphase wurde im Vorlagegefäß eine Präemulsion hergestellt, indem man die Komponente III unter Rühren der Komponente II zufügte. Nachdem eine Innentemperatur des Reaktors von 80° C erreicht war, wurde die Präemulsion innerhalb einer Zeitspanne von 2 bis 2,5 Stunden zudosiert. Nach beendeter Zugabe wurde die Temperatur weitere 2 Stunden bei 80° C gehalten. Anschließend wurde die Dispersion abgekühlt; der pH-Wert wurde mit der 10 %-igen Ammoniumcarbonatlösung auf ca. 7 eingestellt.


Beispiel 2.


Herstellung eines Ethylacrylat/Acrylsäure-Copolymerisats.

Es wurden zunächst die folgenden Komponenten hergestellt:

Komponente I:

662,6 g vollentsalztes Wasser

3,2 g OS

0,4 g NaOH (Plätzchen), gelöst in 8,7 vollentsalztem Wasser.

Komponente II:

0,5 g Ammoniumperoxodisulfat

8,7 g vollentsalztes Wasser

Komponente III:

8,0 g Wasserstoffperoxid (30 %-ig)

Komponente IV:

290,9 g Ethylacrylat

9,0 g Acrylsäure.

Zur pH-Einstellung:

8,0 g $NH_4OH$ konz.

Die Komponente I wurde im dem in Beispiel 1 bschriebenen Reaktionsgefäß vorgelegt. Das Reaktionsgefäß wurde 30 min mit Stickstoff gespült und anschließend auf 80° C aufgeheizt. Bei 70° C wurde die Lösung II zugegeben. Während der Aufheizphase wurde die Komponente IV hergestellt. Bei Erreichen einer Reaktorinnentemperatur von 80° C wurde die Komponente IV über einen Zeitraum von 50 bis 60 min zudosiert. Nach weitern 10 min erfolgte die Zugabe der Komponente III. Anschließend wurde die Tempera-

7

tur weitere 40 min bei 86 bis 87° C gehalten. Die erhaltene Dispersion wurde abgekühlt; der pH-Wert wurde mit konzentriertem Ammoniak auf auf ca. 8 eingestellt.

Die Beispiele 1 und 2 wurden jeweils mit entsprechenden Mengen OES5 und OES10 wiederholt.

Die Prüfung der vorstehend erhaltenen Polymerdispersionen ergab die in Tabelle 1 wiedergegebenen Ergebnisse.

Tabelle 1

| Prüfung der erhaltenen Dispersionen | | | |
|---|---|---|---|
| | Emulgator | | |
| Beispiel 1 | OS | OES5 | OES10 |
| Koagulat (%) | 0,7 | 0,6 | 0,9 |
| Trockenrückstand (%) | 49,0 | 49,1 | 49,0 |
| Viskosität (mPa.s) | 72,5 | 77,5 | 52,5 |
| pH-Wert | 6,5 | 6,7 | 6,6 |
| MFT (°C) | 13 | 13 | 13 |
| mech. Stabilität* | stabil | stabil | stabil |

\* Zusatz 0,25 Gew.-% Dehydran G (handelsüblicher Entschäumer für wäßrige Systeme)

| Beispiel 2 | OS | OES5 | OES10 |
|---|---|---|---|
| Koagulat (%) | 0,8 | 1,1 | 2,2 |
| Trockenrückstand (%) | 29,7 | 29,6 | 29,2 |
| Viskosität (mPa.s) | 15 | 20 | 17,5 |
| pH-Wert | 8,1 | 8,1 | 8,1 |
| MFT (°C) | 3 | 3 | 3 |
| mech. Stabilität* | 0,1 | 0,1 | 0.1 |

\* Zusatz 0,25 Gew.-% Dehydran P4 (handelsüblicher Entschäumer für wäßrige Systeme), Angabe Gew.-% Koagulat

Die Ergebnisse der Schaummessung sind in der folgenden Tabelle 2 zusammengefaßt; es ergibt sich, daß die erfindungsgemäß zu verwendenden Tenside deutlich schaumärmer als Natriumlaurylsulfat sind.

Tabelle 2

| Ergebnisse der Schaummessung | | | | | | | |
|---|---|---|---|---|---|---|---|
| Komponente | Rezeptur | Methode | Schaumhöhe | | | | |
| | | | 0' | 1' | 3' | 5' | 20' |
| OS | - | A | 150 | 50 | 20 | 1 | 0 |
| OES5 | - | A | 170 | 60 | 30 | 5 | 0 |
| OES10 | - | A | 180 | 60 | 30 | 250 | 0 |
| NaLS* | - | A | 500 | 450 | 400 | 250 | 80 |
| OS | I | B | 1980 | 1960 | 1880 | 1800 | 900 |
| OES5 | I | B | 2000 | 1980 | 1880 | 1800 | 900 |
| OES10 | I | B | 1980 | 1960 | 1880 | 1800 | 1000 |
| NaLS* | I | B | 3000 | 2950 | 2820 | 2760 | 2150 |
| OS | II | B | 900 | 600 | 400 | 380 | 0 |
| OES5 | II | B | 500 | 420 | 400 | 380 | 0 |
| OES10 | II | B | 440 | 400 | 380 | 380 | 0 |
| NaLS* | II | B | 1500 | 1480 | 1400 | 1250 | 550 |

\* NaLS = Natriumlaurylsulfat

Die Abbaubarkeit von Tensiden läßt sich anhand des biochemischen Sauerstoffbedarfs (BSB) bei der mikrobiellen Oxidation bewerten. Dabei wird der theoretische BSB-Wert (in %), der die Menge an Sauerstoff angibt, die zur vollständigen Oxidation der Testsubstanz zu Kohlendioxid, Wasser, Sulfat, Nitrat und dergleichen erforderlich ist, zu dem tatsächlich gefundenen Wert in Beziehung gesetzt, vgl. "Tenside Detergents", 8,4 (1971), 182.

Durchgeführt wurde der Test über einen Zeitraum von 30 Tagen in einem geschlossenen System bei einer Prüfkonzentration von 2 mg aktive Substanz/l [zur Testmethode: vgl. "Fette, Seifen, Anstrichmittel 65 (1963), 37].

Zum Vergleich wurde der für OES10 ermittelte BSB-Wert = 100 % gesetzt; alle weiteren Angaben beziehen sich hierauf. Die Ergebnisse sind in der Tabelle 3 zusammengefaßt. Aus den Beispielen ergibt sich, daß die erfindungsgemäß einzusetzenden Tenside deutlich leichter abbaubar als Natriumlaurylsulfat und Nonylphenolethersulfat sind.

Tabelle 3

| Biologische Abbaubarkeit | |
|---|---|
| Komponente | BSB |
| OS | 97 |
| OES5 | 98 |
| OES10 | 100 |
| NaLS[1] | 91 |
| NP9S[2] | < 60 |

1) NaLS = Natriumlaurylsulfat
2) NP9S = Nonylphenol-9EO-sulfat

**Ansprüche**

1. Verwendung von Fettalkyl- bzw. Fettalkenyl-hydroxysulfonaten der allgemeinen Formel I

$R^1O-(C_mH_{2m})_n-OH$    (I)

in der

$R^1$ eine Gruppe der Formel IIa bzw. IIb

$$CH_3\text{-}(CH_2)x\text{-}CH(OH)\text{-}(CH_2)_y\text{-}CH(SO_3M)\text{-}(CH_2)_z\text{-}CH_2\text{-} \qquad \text{(IIa)}$$

bzw.

$$CH_3\text{-}(CH_2)_x\text{-}CH(SO_3M)\text{-}(CH_2)_y\text{-}CH(OH)\text{-}(CH_2)_z\text{-}CH_2\text{-} \qquad \text{(IIb)}$$

oder ein durch Abspaltung eines Wassermoleküls aus der Gruppe der Formel IIa bzw. IIb gebildeter Rest ist,

m die Zahl 2 und/oder 3,

n eine Zahl im Bereich von 0 bis 100, insbesondere von 0 bis 40,

x, y und z jeweils Zahlen im Bereich von 0 bis 14, wobei die Summe von x, y und z 14 beträgt, und

M ein Alkalimetallkation, ein Ammoniumion oder ein Äquivalent eines Erdalkalimetallkations ist,

als Emulgatoren für die Emulsionspolymerisation.

2. Verwendung nach Anspruch 1, dadurch gekennzeichnet, daß in den Fettalkyl- bzw. Fettalkenyl-hydroxysulfonaten der allgemeinen Formel I M ein Natriumion, m die Zahl 2 und n eine Zahl im Bereich von 0 bis 20 ist.

3. Verwendung nach Anspruch 1 oder 2, dadurch gekennzeichnet, daß man die Fettalkyl- bzw. Fettalkenyl-hydroxysulfonate der allgemeinen Formel I in einer Menge von 0,5 bis 10, insbesondere von 1 bis 5 Gew.-%, bezogen auf zu erwartende Polymeremulsion, einsetzt.

4. Verwendung nach mindestens einem der Ansprüche 1 bis 3, dadurch gekennzeichnet, daß man die Fettalkyl- bzw. Fettalkenyl-hydroxysulfonate der allgemeinen Formel I in einer Menge von 1 bis 3 Gew.-%, bezogen auf zu erwartende Polymeremulsion, einsetzt.

5. Verwendung nach mindestens einem der Ansprüche 1 bis 4, dadurch gekennzeichnet, daß man die Fettalkyl- bzw. Fettalkenyl-hydroxysulfonate der allgemeinen Formel I in der Emulsionspolymerisation von olefinische Doppelbindungen aufweisenden, polymerisierbaren Monomeren, insbesondere von (Meth)-acrylsäure und Derivaten derselben oder Vinylestern, einsetzt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | DE-A-3 725 030  (HENKEL)<br>* Anspruch 1; Seite 4, Zeilen 18-25 *<br>----- | 1-5 | C 08 F   2/26 |

|  |  |  | **RECHERCHIERTE SACHGEBIETE (Int. Cl.5)** |
|---|---|---|---|
|  |  |  | C 08 F |

Der vorliegende Recherchenbericht wurde für alle Patentansprüche erstellt

| Recherchenort | Abschlußdatum der Recherche | Prüfer |
|---|---|---|
| DEN HAAG | 23-09-1990 | CAUWENBERG C.L.M. |